# EUROPEAN PATENT SPECIFICATION

(11) **EP 1 591 219 B1**
(45) Date of publication and mention of the grant of the patent: **11.08.2010**
(21) Application number: 04700536.8
(22) Date of filing: 07.01.2004
(51) Int. Cl.: B29C 39/02, B29C 39/24, C08J 9/30, B29K 105/04, B29B 7/76, B29C 44/34

(54) **METHOD FOR THE PRODUCTION OF A CURED PRODUCT**
VERFAHREN ZUR HERSTELLUNG EINES GEHÄRTETEN PRODUKTES
MÉTHODE POUR LA FABRICATION D'UN PRODUIT DURCIT

(30) Priority: 07.01.2003 JP 2003001036
(43) Date of publication of application: 02.11.2005
(73) Proprietor: SUNSTAR GIKEN KABUSHIKI KAISHA, Takatsuki-shi, Osaka 569-1195 (JP)
(72) Inventor: TAKADA, Masaharu,, Ibaraki-shi Osaka 567-0046 (JP); OCHI, Shinji,, Takatsuki-shi, Osaka 569-1044 (JP); OKUDA, Shinji,, Takarazuka-shi Hyogo 665-0883 (JP)
(74) Representative: Wablat, Wolfgang
(86) International application number: PCT/JP2004/000044
(87) International publication number: WO 2004/060628

(56) References cited:
- EP-A- 0 757 067
- EP-A- 0 776 745
- EP-A- 0 974 391
- EP-A1- 0 757 067
- EP-A1- 0 974 391
- WO-A-99/35197
- JP-A- 2 251 592
- JP-A- 4 226 321
- JP-A- 5 309 329
- JP-A- 62 102 859
- JP-A- 2002 160 577
- US-A- 5 188 693
- US-A- 5 480 589
- US-A- 5 866 651

## Description

The present invention relates to a method to produce a cured product by mechanically mixing and dispersing a paste material and a low-pressure gas, as well as to a one-pack type curing paste material to be used in this method.

Until now, there is known a certain method for producing a foamed product by mechanically mixing and dispersing a low-pressure gas into a paste material to produce an expandable material, followed by discharging and expanding the expandable material (discharge and expansion method), which comprises mechanically mixing and dispersing said paste material and a low-pressure gas by using a piston pump which is reciprocated in a cylinder to carry out suction stroke and discharge stroke, by supplying a gas into the cylinder during and/or after a suction stroke of a piston pump,
supplying a paste material into the cylinder with said gas by batch process,
carrying out the discharge stroke by using the piston pump after supplying the paste material, and
discharging the gas and the paste material to a pipe in the discharge stroke,
and then subjecting the resultant expandable material to discharging and expanding,
as well as a mechanical foaming apparatus suitable for performing said method (see JP-B-3212533 (JP-A-10-272344)).

The above process is remarkably useful in the standpoint to increase a safety in handling and a reliability of a gas injection and to control highly precisely the forming magnification. However, the cured product (foamed product) produced by the discharge and expansion method have sometimes continuous cells (i.e., ununiformity size foam) depending on the starting paste material, and hence, it has been desired to obtain always a constant-forming product with dense uniform closed-cells (i.e., uniform microcell).

Under the circumstances, the present inventors have intensively studied, and as a result, have found that the specification of viscosity characteristics of paste material make the above purpose achieve, and then the present invention has been completed.

That is to say, the present invention provides a method to produce a cured product by mechanically mixing and dispersing a paste material and a low-pressure gas, wherein the pressure is in the range of 0.1-5 kg/cm² to produce an expandable material, followed by discharging and expanding the expandable material, **characterised in that** a one-pack type curing paste material is used as the paste material, having viscosity characteristics in a zone defined by points A, B, C and D, said points A and B being at 5 and 3,000 Pa s of an apparent viscosity at 20°C and at a shear rate of 0.43 sec⁻¹, and said points C and D being at 2 and 200 Pa s of an apparent viscosity at 20°C and at a shear rate of 783 sec⁻¹, respectively, and mechanically mixing and dispersing the one-pack type curing material and the low-pressure gas, followed by discharging and expanding the resulting expandable material.

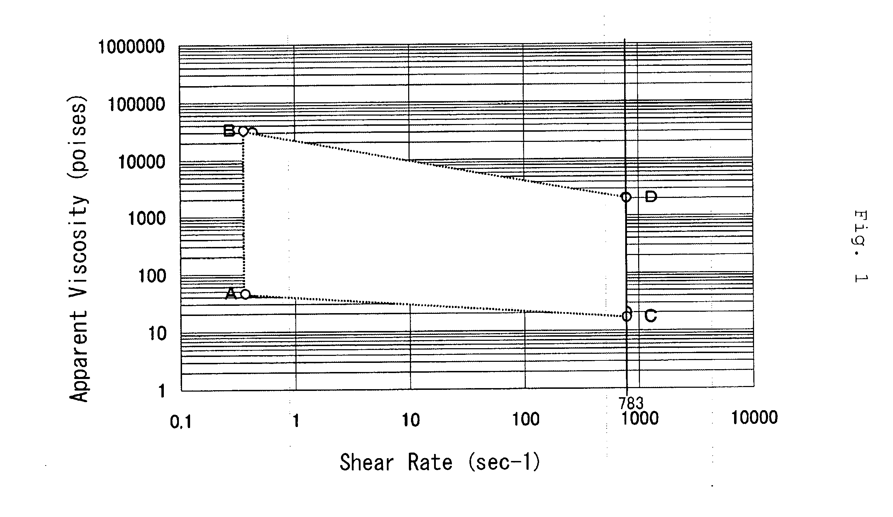

The zone defined by points A, B, C and D is represented in the graph of Fig. 1 showing the relationship between shear rate and apparent viscosity, said points A and B being at 5-3000 Pa s of an apparent viscosity (measured by a Brookfield rotary viscometer using spindle No.7, at 2 rpm, at 20°C) in low shear rate region (0.43 sec⁻¹) and said points C and D being at 2-200 Pa s of an apparent viscosity (measured by an apparent viscosity meter according to JIS K2220 20°C) in high shear rate region (783 sec⁻¹). The present invention further provides a one-pack type curing paste material to be used in the discharging and expanding method according to the present invention, which is **characterised in that** said material has viscosity characteristics in a zone defined by points A, B, C and D, said points A and B being at 5 and 3,000 Pa s of an apparent viscosity at 20°C and at a shear rate of 0.43 sec⁻¹, respectively and said points C and D being at 2 and 200 Pa s of an apparent viscosity at 20°C and at a shear rate of 783 sec⁻¹, respectively.

The one-pack type curing paste material according to the present invention is not limited by the kind of resin or the method of the curing, but should have the above viscosity characteristics, and especially the material is useful to be applied to the mechanical foaming apparatus described in above-mentioned JP-B-3212533 (JP-A-10-272344).

With respect to the viscosity range mentioned above, when the apparent viscosity of 0.43 sec⁻¹ is less than 5 Pa s, a foaming magnification decreases due to a foam collapse, on the other hand, when the apparent viscosity is more than 3000 Pa s, an air leakage from the part around the discharge bead increases, which causes the forming magnification being 2-folds as much. Besides, when the apparent viscosity of 783 sec⁻¹ is less than 2 Pa s, a foaming magnification decreases due to a cell collapse at the discharge, and when the apparent viscosity is more than 200 Pa s, the discharge becomes impossible since the liquidity of the materials becomes difficult.

In addition to such low/high shear rate, the apparent viscosity (measured by an apparent viscosity meter according to JIS K2220 20°C) in middle shear rate region (64 sec⁻¹) is also set at the range of 2.7-300 Pa s.

The one-pack type curing paste material refers to a material that is a one-pack type and a viscous paste state of high-viscosity at room temperature to heated temperature before use, which has a curing mechanism based on curing by a reaction, by cooling to room temperature from heated molten state, and by applying with thermal energy, light, radiation energy and the like. The examples of them are compositions of moisture-curable type, thermosetting type, hot-melt type, sol-gel type, vulcanization-crosslinking type, and photo/radiation-curable type; said compositions comprising polyurethane resins, silicone resins, epoxy resins, synthetic rubbers, polyolefin resins, polyester resins, acrylic resins, poly(vinyl chlorides), or other thermoplastics or thermoplastic elastomers; which can be prepared from a monomer, an oligomer, a polymer and the like of a thermoplastic and a thermosetting material.

In an embodiment, the one-pack type curing polyurethanes paste material comprising a urethane prepolymer having a terminal active isocyanate group (NCO group); or a blocked urethane prepolymer and/or a blocked polyisocyanate compound which are temporarily blocked in order to inactivate the active isocyanate group of the urethane prepolymer and/or polyisocyanate compound. Furthermore, the material comprises these urethane prepolymer as a main component and can be also prepared into a moisture-curable type;
a thermosetting type in combination with a latent curing agent; or a thermosetting type comprising a normal curing agent and/or a latent curing agent in combination with a blocked polyisocyanate compound.

The urethane prepolymer including an active isocyanate group, which is used as polyurethanes paste material composed as above may be obtained by the reaction between an excess amount of a polyisocyanate compound and a polyol.

The polyisocyanate compound includes aromatic, aliphatic and alicyclic polyisocyanate compounds, such as tolylene diisocyanate (TDI), diphenylmethane diisocyanate, 3,3'-dimethyl-4,4'-biphenylene diisocyanate, 1,4-phenylene diisocyanate, xylylene diisocyanate, tetramethylxylylene diisocyanate, naphthylene diisocyanate, dicyclohexylmethane-4,4'-diisocyanate, crude TDI, polymethylene-polyphenyl isocyanate, isophorone diisocyanate, hexamethylene diisocyanate, xylylene diisocyanate hydride, and isocyanurate, carbodiimide or biuret compounds of these isocyanate compounds, which may be used alone or in combination of one or more thereof.

The polyol component in the invention includes, for example,
polyether polyols which are made by addition-polymerization of an alkylene oxide such as ethylene oxide, propylene oxide, and a mixture of ethylene oxide and propylene oxide, with a polyhydric alcohol such as ethylene glycol, propylene glycol, glycerin, trimetylolpropane, pentaerythritol, sorbitol, sucrose and the like;
ethylene glycol, propylene glycol, and oligoglycols thereof;

polyols such as butyleneglycol, hexyleneglycol, and polytetramethylene ether glycols;
polyester polyols such as polycaprolactone polyol and polyethylene adipate;

polyolefin polyols such as polybutadienepolyol, and polyisoprenepolyol;
higher fatty acid esters having hydroxyl group such as castor oil;
polysiloxane polyols having acryl polyol, and/or hydroxyl group(s); and
polymer polyols which are prepared by graft polymerization of polyether polyols or polyesters with a vinyl monomer.

The urethane prepolymer having a terminal active isocyanate group can be prepared by reacting a polyol component with an excess amount of the polyisocyanate compound in an equivalent ratio of 1.1-3.5 of the NCO group of the polyisocyanate compound per the OH group of the polyol component. The reaction can be carried out at room temperature or heated temperature of 60-100°C for 1-24 hours in the presence of a catalyst (e.g. organic tin compound such as dibutyl tin dilaurate, bismuth compounds such as bismuth octynoate, tertiary amine compounds, etc.). Hence, a urethane prepolymer having a terminal active isocyanate (0.5-10% (w/w)) and a viscosity (3-50 Pa s/20°C) can be prepared.

The one-pack type curing polyurethanes paste material may be made into a moisture-curable type which can be cured by reacting the active isocyanate group of urethane prepolymer with moisture of the atmosphere. For the moisture-curable type paste material, there may be used latent curing agent such as ketimine compounds, enamine compounds, aldimine compounds, oxazolidine compounds and the like which are produced reversibly by a dehydration-condensation reaction of a polyamine compound and a carbonyl compound.

On the other hand, in order to make urethane prepolymers into thermosetting type in combination with a latent curing agent can be activated by heat. The preferable latent curing agent is an inactivated solid polyamine. The solid polyamine at room temperature can preferably be produced, for example, by mixing 76.9 parts by weight of 1,12-dodecanediamine (mp: 71°C) having a mean particle size of approximately 8 microns and 23.1 parts by weight of titanium oxide having a mean particle size of 0.02 microns; and milling the mixture with a jet mill to give a micronized polyamine having a mean particle size of approximately 8 microns, which are adhered with titanium oxide.

The procedure for producing the one-pack type curing polyurethanes paste material is described in detail in WO 95/26374 by the present inventors. The procedure is summarized below. The paste material is prepared by adding a latent curing agent of an inactivated solid polyamine to a single or mixture of a urethane prepolymer having a terminal active isocyanate group obtained by reacting a polyol with an excess amount of polyisocyanate compound, wherein said solid polyamine used as latent curing agent exhibits mp > 50°C and is for example, a micronized coated polyamine which is prepared by adhering a micronized powder having a mean particle size of 2 microns onto the surface of a solid polyamine having a mean particle size of about 20 microns whereby the active amino group of the polyamine is inactivated. The solid polyamine and micronized powder are used in the weight ratio of 1/0.001-0.5 (solid polyamine: micronized material) and whereby the amino groups of the surface is inactivated.

The solid polyamine used in the invention includes aromatic or aliphatic polyamine compounds having a melting point of not less than 50°C which is solid at room temperature, for example, aromatic solid polyamines such as 4,4'-diaminodiphenylmethane, 2,4'-diaminodiphenylmethane, 3,3'-diaminodiphenylmethane, 3,4'-diaminodiphenylmethane, 2,2'-diaminobiphenyl, 2,4'-diaminobiphenyl, 3,3'-diaminobiphenyl, 2,4-diaminophenol, 2,5-diaminophenol, o-phenylenediamine, m-phenylenediamine, 2,3-tolylenediamine, 2,4-tolylenediamine, 2,5-tolylenediamine, 2,6-tolylenediamine, 3,4-tolylenediamine and the like; and aliphatic solid polyamines such as 1,12-dodecanediamine, 2,10-decanediamine, 1,8-octane-diamine, 1,14-tetradecanediamine, 1,16-hexadecanediamine and the like, which may be used alone or in combination of two or more thereof. The solid polyamines are grinded to be controlled to a mean particle size of less than 20 µm, preferably 3-15 µm.

A method for inactivating the solid polyamine in the latent curing agent is a coating of an amino group on the particle surface with an inactivating agent. As the inactivating agent, an organic or inorganic micronized powder can be used, and it will be adhered on the particle surface of a solid polyamine. The micronized powder also includes an inorganic fine particle such as titanium oxide, calcium carbonate, clay, silica, zirconia, carbon, alumina and talc, and an organic fine particle such as poly(vinyl chloride), polyacrylic resin, polystyrene and polyethylene. The mean particle size of the micronized powder used herein is not more than 2 microns, preferably not more than 1 micron. The inactivating procedure of a solid polyamine is to cover the particle surface of the solid polyamine with the above micronized powder. In the inactivating procedure, the weight ratio of solid polyamine powder/micronized powder ranges within about 1/0.001-0.5. During milling the solid polyamine so as to have a predetermined particle size, the micronized powder is mixed and dispersed thereto, so that the micronized powder can be adhered on the surface of the solid polyamine particles.

The urethane prepolymer and the inactivated solid polyamine latent curing agent prepared as mentioned above are blended in an equivalent ratio of the amino group of the polyamines to the isocyanate group of the urethane prepolymer being 1/0.5-2.0 when re-activated by heating.

The obtained one-pack type curing polyurethanes paste material can be cured by heating. Especially, the material exhibits critical curing characteristics in the heating temperature. When the temperature is less than 60°C, it is not cured, but when the temperature is 80°C or more, the inactivated solid polyamine will be re-activated and then the curing reaction initiates, which reaction will be almost completed within a very short time.

The blocked urethane prepolymer and/or blocked polyisocyanate compound used in the thermosetting type of one-pack type thermosetting polyurethanes paste material is produced by the blocking reaction wherein the active NCO group of the urethane prepolymer and/or polyisocyanate compound can be provisionally inactivated with a blocker. The blocker includes phenols (phenol, cresol, xylenol, ethylphenol and the like), lactams (ε-caprolactam, δ-valerolactam, β-butyrolactam, β-propiolactam and the like), oximes (formamidoxime, acetoamidoxime, acetoxime, methylethylketoxime, diacetyl monoxime, benzophenonoxime, cyclohexanonoxime and the like), activated methylenes (diethyl malonate, dimethyl malonate, ethyl acetoacetate, methyl acetoacetate, acetyl acetone and the like), alcohols (methanol, ethanol, propanol, isopropanol, butanol, 2-ethylhexanol, ethyleneglycol monomethyl ether, ethyleneglycol monoethyl ether, ethyleneglycol monobutyl ether and the like), benzotriazole, mercaptans, acid amides, imides, amines, imidazoles, ureas and the like. In particular, phenols, lactams and oximes are preferable. The blocking reaction of the NCO group of the urethane prepolymer or polyisocyanate compound with a blocker is carried out in an equivalent ratio of the active hydrogen group of the blocker to the NCO group of 0.9-1.1, in the presence of a catalyst under heating temperature (50-110°C) to give a blocked urethane prepolymer or blocked polyisocyanate compound whose active NCO group is blocked.

The curing agent for the above blocked product includes the aforementioned active hydrogen compounds as a polyol component for the preparation of the urethane prepolymers, as well as a polyoxyalkylene polyamine, an alkylene oxide adduct of an aminoalcohol, an alkylene oxide adduct of an alkylene polyamine, a ketimine derivative of a polyoxy alkylene polyamine, a ketimine derivative of a polyamine and the like. The curing agent may be used in an amount of 0.5-1.5 equivalents to the active NCO group.

Examples of a filler for the one-pack type curing polyurethanes paste material having the above viscosity characteristics are ground calcium carbonate, treated calcium carbonate, clay, silica, zirconia, carbon, alumina, talc, mica, balloon, organic plastic balloon, plastic powder, plastic fiber, and the like. The paste material may optionally contain plasticizers (e.g., dibutyl phthalate, dioctyl phthalate, dicyclohexyl phthalate, diisooctyl phthalate, diisodecyl phthalate, dibenzyl phthalate, trioctyl phosphate, epoxy plasticizer, polyester plasticizer such as adipate), solvents, thixotropic agents, ultraviolet absorbers, antioxidants, adhesive promoters, dehydrating agents, foaming regulator, viscosity regulator and the like in a suitable amount.

In addition to the viscosity characteristics, other properties of a urethane prepolymer of a main ingredient may be tuned, for example, the thixotropic properties which are concerned with correlation between flow properties and structural viscosity are regulated by a kind, particle size and amount of a filler; a surface-treated or non-treated filler; a kind and amount of a plasticizer; a viscosity regulator and the like.

More specifically, one-pack curing paste material of the present invention may be prepared in the following manner, first of all, polyether polyol and diphenyl methane diisocyanate can be reacted at the temperature of 80°C for 2 hours to give a urethane prepolymer having a terminal active isocyanate group (the amount of the terminal NCO group is 2.4 % and the viscosity is 100 Pa s/20°C). An inactivated solid polyamine of a latent curing agent is prepared by mixing 76.9 parts by weight of 1,12-dodecanediamine (mp: 71°C) having a mean particle size of about 8 microns and 23.1 parts by weight of titanium oxide having a mean particle size of 0.02 microns and milling the mixture with a jet mill to give 100 parts by weight of the desired micronized coated polyamine having a mean particle size of about 8 microns. Next, to 100 parts by weight of the polyurethane prepolymer having the above terminal active isocyanate group, 2-10 parts by weight of a latent curing agent is added, and a filler is added in 0-100 parts by weight therein. When an opaque white or transparent foamed cured product is desired, any filler is not compounded, while when a rigid foamed cured product is desired, a large amount of fillers are compounded. In order to obtain a composition having the desired viscosity characteristics of the present invention, a mixture of surface-treated calcium carbonate and untreated ground calcium carbonate is used as a filler. When a tough foamed cured product is desired, a reinforcing filler such as carbon and silica is used. If the above reinforcing filler is incorporated in an amount of more than 50 parts by weight, the viscosity in low shear rate region increase and the thixotropic properties become strong, and then it may not have the desired viscosity characteristics of the present invention. In order to avoid such a disadvantage, calcium carbonate should be added. When the particle size of calcium carbonate is small, the thixotropic viscosity characteristics are exhibited like incorporation of a reinforcing filler, and then calcium carbonate having a particle size of more than 20 µm is used to adjust the viscosity characteristics. For example, when 10 parts by weight of ground calcium carbonate (average particle diameter: 45 µm), 10 parts by weight of calcium carbonate treated with fatty acid (average particle diameter: 3 µm), 10 parts by weight of carbon as a filler are mixed with 20 parts by weight of a plasticizer, there is obtained a one-pack type thermosetting paste material having a lower shear rate region of 100-500 Pa s, a higher shear rate region 10-30 Pa s of paste material, a thermosetting critical temperature of about 80°C. Optionally, silicone oil, nonionic surfactant may be compounded.

Next, in other embodiment, a silicone moisture-curable type material and a thermosetting type material are exemplified as a one-pack type curing silicones paste material. Organo-polysiloxane (silicone) having active hydroxy groups (silanols) at both ends and silanes or siloxanes compounds having two or more hydrolytic functional groups as a crosslinking agent are basic elements, which can be hydrolyzed with moisture of the media or the atmosphere and condensed to be cured. Especially, for the preparation of the thermosetting type paste material, a polysiloxane having a radical polymerized unsaturated double bond or a monomer, oligomer and/or polymer having no siloxane bond can be optionally used, and a polymerization initiator such as a peroxide compound is added to give a desired thermosetting type paste material. In this case, plasticizer, filler, coloring agent, adhesive promoter, promoting catalyst for curing reaction, foaming regulator, viscosity regulator and the like may be added for the preparation as the one-pack type curing polyurethanes paste material.

In order to exhibit a specific viscosity characteristics of the present invention, for example, 50-90 % (w/w) silicone, 2-10 % (w/w) crosslinking agent, 5-50 % (w/w) filler may be added and further a small amount of a catalyst and adhesive promoter may be added if necessary. Particularly, a surfactant, a silicone oil and the like may be added to the one-pack type curing silicones paste material of the viscosity characteristics in order to make a low-pressure gas easily dispersed, to make the material desired expanded as a nearly spherical form and to prevent breaking foam or defoaming. Using a one-pack type curing silicones paste material, in particularly an opaque white or transparent cured product can be obtained.

Besides the above polyurethanes and silicones paste material, as a one-pack type curing paste material, a moisture-curing type material in which the main ingredient is a polyalkylene ether polymer having a terminal alkoxysilyl group, a vinyl polymer having a terminal alkoxysilyl group; or a thermosetting type may be used. The thermosetting type of the one-pack type curing paste material includes the above polyurethanes, silicones as well as unsaturated polyester resin and epoxy resin, furthermore crosslink of peroxide compound, crosslink of polyamine compound, crosslink of polyamide compound.

The photo/radiation-curable type of the one-pack type curing paste material includes UV-curable, photo-curable, electron-curable and the like, in which the main ingredient is a curable monomer and/or oligomer having a unsaturated double bond(s), in which rubber, elastomer, the other polymer, photoreaction initiator and the like can be further added. Especially, the photo/radiation-curable type paste material is suitable for a transparent cured product. When the filler and the like is opaque, photo/radiation energy can be hardly penetrated to the paste material, so thereby it can be understood that the curable properties have disadvantageous.

The photo-curable monomer includes methyl acrylate, ethyl acrylate, n-butyl acrylate, 2-ethylhexyl acrylate, isodecyl acrylate, lauryl acrylate, stearyl acrylate, 2-hydroxyethyl acrylate, 2-hydroxypropyl acrylate, trimethylolpropane triacrylate, trimethylolpropane triacrylate, methoxyethyl acrylate, n-butoxyethyl acrylate, dimethylaminoethyl acrylate, ethyleneglycol acrylate, neopentyl glycol acrylate, 1,6-hexanediol acrylate, diethylene glycol acrylate, triethylene acrylate, dipropylene glycol diacrylate, ethylcarbitol acrylate, 1,5-pentanediol acrylate, pentane erythritol acrylate, tetrahydrofurfuryl acrylate, glycidyl acrylate, benzyl acrylate, 2-hydroxyethyl acryloylphosphate, 2-hydroxy-3-phenoxypropyl acrylate, α,ω-diacryloyl bis-ethyleneglycol phthalate, α,ω-diacryloyl bis-ethylene glycol tetrahydrophthalate and the like.

The photo-curable oligomer includes epoxy acrylate resin, urethane acrylate resin, polyester acrylate resin. The urethane acrylate resin is preferable due to its flexibility and elasticity after cured. The photo-curable oligomer is a base resin which may be a determinant for the characteristics of a cured product. The loadings of photo-curable monomer and/or oligomer used are 20-95% (w/w), preferably 30-90% (w/w).

The rubber, elastomer, and the other polymer include natural rubber, polyisoprene rubber, polyisobutylene rubber, polybutadiene rubber, butyl rubber, nitrilebutyl rubber, polychloroprene rubber, styrene butadiene rubber, styrene isoprene rubber, acryl rubber, polybutylene, polybutene, polyphenylene oxide, polycarbonate, vinyl polyacetate, methacryl resin, polyacrylonitrile, thermoplastic polyester, polyamide, polyvinyl butyral, epoxy resin, vinyl ethylene acetate copolymer and the like. These are used as a solution or a uniform dispersion of photo-curable monomer and/or oligomer.

The photoreaction initiator includes benzoin methyl ether, benzoin ethyl ether, a-methyl benzoin, benzophenone, benzyl, acetophenone, anthraquinone, phenanthroquinone, benzylsulfide, 2-chlorothioxanthone, 2-methylthioxanthone and the like. The photoreaction initiator is loaded in an amount of 1-7 parts, preferably 2-5 parts by weight to 100 parts by weight of the main ingredient. When necessary, a polymerization inhibitor and so on can be loaded.

Furthermore, a hotmelt type of the one-pack type curing paste material has a mechanism wherein the solid at room temperature is heated to molten state and then solidified by cooling to room temperature, including a material comprising a thermoplastic resin, which is molten by heating and then solidified by cooling to room temperature. The thermoplastic resin includes polyethylene, polypropylene, polyolefin copolymers such as ethylene propylene copolymer, ethylene vinyl acetate copolymer and SEBS (styrene ethylene/butylene styrene), polystyrene, polyester resin, acrylic resin, poly(vinyl chloride), poly(vinylidene chloride), fluorine resin, polycarbonate, polyacetal, polyamide, styrenebutadiene, polybutadiene, and copolymer thereof. To these thermoplastic resins, a crosslinking functional group such as hydroxyl group, carboxyl group, glycidyl group, amino group, mercapto group, isocyanate group and alkoxysilyl group can be attached, and then the resulting resins can be combined with a compound having a functional group which is reacted with the above crosslinking functional group, to prepare a one-pack type curing paste material.

The sol-gel type refers to a one-pack type curing paste material of plastisols, and it is a sol-formed one-pack type curing paste material which can be provided by dispersing a fine particle such as poly(vinyl chloride), acrylic resin and polyurethane resin in a plasticizer. This can be hardened from sol to gel by heating.

### BRIEF DESCRIPTION OF DRAWINGS

Fig. 1. A graph that indicates the viscosity characteristics of the paste material of the present invention.
Fig. 2. A circuit diagram of the mechanical foaming apparatus.
Fig. 3. A front cross-sectional view showing the structure of the piston pump.

Fig. 4. A timing chart for illustrating an operation of the piston pump.

The discharging and expanding method of a one-pack type curing paste material of the present invention is illustrated with reference of the drawings.

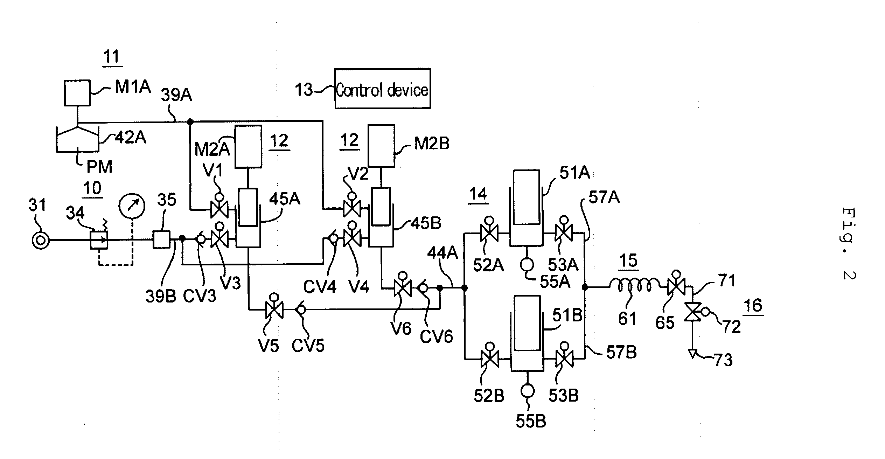

Firstly, on carrying out the method of the discharge and expansion, for example, the mechanical foaming apparatus shown in Figure 2 is preferably used, which is composed of a gas supplying device 10, a one-pack type curing paste material supplying device 11, a piston pump 12, a control device 13, a pressurizing device 14, a dispersing device 15 and a discharge device 16.

The gas supplying device 10 supplies a low-pressured gas adjusted in a range of approximately 0.1-5 kg/cm², preferably 0.1-3 kg/cm².

This gas supplying device 10 comprises the port 31 for receiving compressed air from a compressor, a pressure regulating valve 34 and a gas flowmeter 35, etc. The compressed gas is not limited to compressed air, and therein carbon dioxide gas, nitrogen gas and the like may be also used.

The one-pack type curing paste material supplying device 11 supplies the one-pack type curing paste material PM to the pipe 39A under a high pressure adjusted in a range of approximately 100-300 kg/cm², preferably approximately 150-250 kg/cm². In this embodiment, the plunger pump 42A of a follower-plate type and the like is used as a pump for pumping the one-pack type curing paste material. With the plunger pump 42A, the one-pack type curing paste material PM filled in a container is transferred into pipe 39A under a high pressure.

The piston pump 12 comprises two piston pumps 45A and 45B which are alternately operated. The piston pumps 45A and 45B include pistons reciprocally and linearly moved by motors M2A and M2B respectively. Thus, the piston reciprocally moves within a cylinder in each piston pump, thereby effecting the suction stroke and the discharge stroke. The piston pumps 45A and 45B are laid between the pipe 39A and the pipe 44A, and hereby the one-pack type curing paste material PM supplied under pressure from the paste material supplying device 11 and a gas supplied from the gas supplying device 10 are introduced under a predetermined pressure in a batchwise manner.

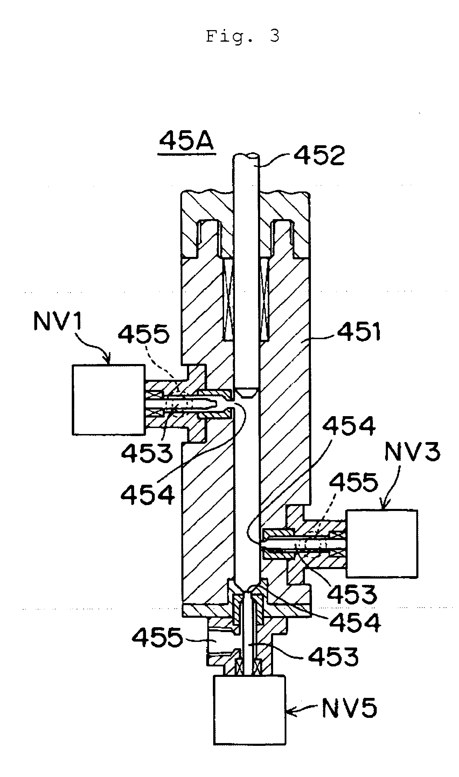

Then, the structure of the piston pumps 45A (and 45B) is illustrated with reference to Figure 3.

The piston pump 45A comprises a cylinder 451, a piston 452 which sealingly engages and slidably moves within the cylinder 451 and three needle valves NV1, NV3 and NV5 set in the cylinder 451.

The needle valve NV5 is a valve for controlling discharge, which is set at the stroke end of the discharge stroke in the piston pump 45A. The needle valve NV3 is a valve for controlling supply of the gas, which is set in the vicinity of the stroke end of the discharge stroke. The needle valve NV1 is a valve for controlling supply of the one-part type curing paste material PM, which is set in the vicinity of the stroke end of the suction stroke.

The needle valves NV1, NV3 and NV5 are substantially identical to each other in terms of structure. In each needle valve, the needle 453 is axially moved by a pneumatic cylinder so that the forward end of the needle 453 opens and closes the aperture 454 set on the inner circumferential surface or the end surface of the cylinder 451. The valve body includes the port 455 communicating with the valve chamber.

When the needle valves NV1, NV3 and NV5 are closed, the forward end of the needle 453 is same level on one side with the inner circumferential surface or the end surface of the cylinder 451, so that the dead space between the needle 453 and the piston 452 is substantially zero. Therefore, when the needle valves NV1, NV3 and NV5 are closed, there is no possibility that a part of the gas or the paste material supplied into the cylinder 451 will enter and remain in the valve chambers of the needle valves NV1, NV3 and NV5. When the needle valve NV5 opens to effect the discharge stoke, all the gas and the one-pack type curing paste material in the cylinder 451 are discharged.

The check valves CV3 and CV4 are set in the pipe 39B, and the check valves CV5 and CV6 are set in the pipe 44A, respectively. The volume (discharge volume) of the cylinder of each of the piston pumps 45A and 45B is determined from the diameter and stroke (the distance by which the piston moves) of the piston 452.

The control device 13 controls motors M1A, M2A and M2B and the needle valves NV1, NV3 and NV5 so as to supply the gas into the cylinder 451 of each of the piston pumps 45A and 45B during and/or after the suction stroke, supply the one-pack type curing paste material PM into the cylinder 451 after the suction stroke and effect the discharge stroke after completion of the supply of the one-pack type curing paste material PM, thereby to discharge the gas and the one-pack type curing paste material into the pipe 44A.

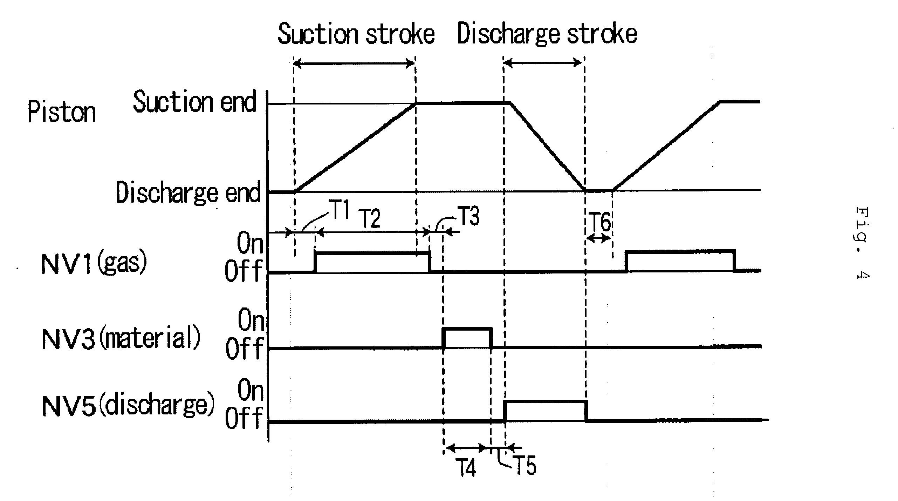

Furthermore, now the way of the operations of the piston pumps will be illustrated based on the timing chart of Figure 4.

In either of the piston pumps 45A and 45B, the piston 452 moves from the discharge end to the suction end, thereby to effect the suction stroke. During the suction stroke, when the time T1 has passed after starting the movement of the piston 452, the needle valve NV1 opens, thereby to supply the gas into the cylinder. The time T1 is a period of about 1-2 seconds. During this period, the pressure in the cylinder 451 is negative. At a short time after the piston has reached the suction end, the needle valve NV1 closes. Therefore, at the time of completion of the suction stroke, the cylinder 451 is filled with the gas having the regulated pressure. When the amount of gas measured is less than a predetermined value, the control device 13 emits a warning signal. Thus, the supply amount of the gas during the suction stroke is monitored by the control device 13.

When the time T3 has passed after closing of the needle valve NV1, the needle valve NV3 opens. The time T3 is a period of about 0.1-0.5 second. Thus, simultaneous opening of the needle valves NV1 and NV3 can be prevented. The needle valve NV3 is open for the time period T4. During this period, the one-pack type curing paste material PM is supplied from the one-pack type curing paste material supplying device 11 into the cylinder 451. Due to high pressure of the one-pack type curing paste material, the low-pressure gas, which has been supplied to the cylinder 451 before supplying the one-pack type curing paste material, is compressed in a ratio equal to the pressure ratio of the gas to give the one-pack type curing paste material. Consequently, the volume of the gas becomes almost negligible.

For example, when the pressure of the low-pressure gas is 1 kg/cm² and the pressure of the one-pack type curing paste material is 200 kg/cm², then the volume of the gas becomes about 1/200. In this case, the one-pack type curing paste material in an amount equal to the volume of the cylinder 451 is mixed with the gas of 1 kg/cm² in the same volume. It should be noted that the gas of 1 kg/cm² in a volume equal to the volume of the cylinder 451 is equivalent to the gas under atmospheric pressure (a pressure of 0 kg/cm²) in a volume twice that of the cylinder 451. That is, supplying the gas of 1 kg/cm² into the cylinder is equivalent to pressurizing the cylinder to +1 kg/cm², as the pressure in the cylinder is a negative pressure of about -1 kg/cm² before supplying the gas during the suction stroke. Therefore, the mixing ratio R of the low-pressure gas and the one-pack type curing paste material when the volume of the gas is converted into that under atmospheric pressure is 2:1. The mixing ratio R is expressed by a general formula R=(P1+1):1 wherein P1 indicates the supply pressure of the low-pressure gas. That is, the mixing ratio R can be easily adjusted or controlled by adjusting the supply pressure P1 of the low-pressure gas.

When the low-pressure gas is mixed with the one-pack type curing paste material and the mixture is dispersed, the one-pack type curing paste material is foamed upon discharge into the atmosphere in a volume 3 (=1+2) times that of the cylinder. In other words, a foaming ratio A of the one-pack type curing paste material is "3". The foaming ratio A is expressed by a general formula (P1+2) wherein P1 indicates the supply pressure of the low-pressure gas.

When the time T5 has passed after closing of the needle valve NV3, the needle valve NV5 opens, and the piston 452 moves from the suction end to the discharge end, thereby to effect the discharge stroke. The time T5 is within a range of about 0.1-0.5 second. During the discharge stroke, the needle valves NV1 and NV3 are closed so that the forward end of the needle 453 of each of the needle valves NV1 and NV3 is same level on one side with the inner circumferential surface of the cylinder 451. Therefore, the dead space is zero and all the low-pressure gas and all the one-pack type curing paste material in the cylinder 451 are discharged from the aperture 454 of the needle valve NV5. When the time T6 has passed after completion of the discharge stroke, the subsequent suction stroke starts. The time T6 is within a range of about 0.1-0.5 second.

With respect to the piston pumps 45A and 45B, after the discharge stroke of one piston pump is completed, the discharge stroke of the other piston pump starts. Consequently, the piston pumps 45A and 45B alternately discharge a gas-mixed material (the best expandable material) into the pipe 44A. In the pipe 44A, the gas-mixed materials from the piston pumps 45A and 45B individually form two layers of the one-pack type curing paste material and the compressed low-pressure gas discharged by a single discharge stroke. Therefore, a series of two-layered materials are discontinuously arranged in the pipe 44A and the gas-mixed materials are arranged in a pulse-like manner in the pipe 44A. Such state can make the subsequent dispersion succeed.

The pressurizing device 14 comprises: the piston pumps 51A, 51B, each comprising a piston reciprocally and linearly driven by a motor to pressurize a fluid; the on-off valves 52A, 52B, 53A and 53B; and the pressure sensors 55A and 55B.

The gas-mixed materials discharged into the pipe 44A are supplied by the piston pumps 51A and 51B which are alternately operated, and are transferred into the pipes 57A and 57B. For example, with respect to an operation of the piston pump 51A, when the piston moves upward within a cylinder while the on-off valve 52A is opened and the on-off valve 53A is closed, the gas-mixed material in the pipe 44A is suctioned into the cylinder. When the piston moves downward while the on-off valve 52A is closed and the on-off valve 53A is opened, the gas-mixed material in the cylinder is extruded to be in a pressurized state. The pressure in the cylinder is detected by the pressure sensor 55A, and thereby a detection signal is sent to the control device 13. The extrusion pressure of the piston pump 51A is 150 kg/cm² or more. The motor for driving the piston is controlled in accordance with a signal from the control device 13, thus controlling suctioning and extrusion of the piston pump 51A and the stream rate (the extrusion rate).

The dispersing device 15 (and the discharge device 16) comprises the dispersing pipe 61 and the on-off valve 65, the discharge pipe 71, the discharge on-off valve 72 and the nozzle 73. The dispersing pipe 61 is a hose having a length of about 2-10 m. In the dispersing pipe 61, the pressure of the gas-mixed material is 150 kg/cm² or more, for example, 200-250 kg/cm². During passing of the pressurized gas-mixed material through the dispersing pipe 61, the gas is dispersed into the paste material PM in the form of fine bubbles having an average diameter of about 0.01 mm.

When the valve 72 is opened, the expandable material from the on-off valve 65 is discharged from the nozzle 73 under the atmospheric pressure. Upon discharge, the fine-dispersed low-pressure gas expands thereby to foam the one-pack type curing paste material. The expandable material whose forming magnification is 1.5-5 can be applied to foam-coating by moving the nozzle 73 on a predetermined trajectory.

The foam-coated one-pack type curing paste material can be left to stand (to cure in normal condition) or cured in an appropriate manner to give a cured product (foaming product) with dense uniform closed-cells.

The index of shape retention as to the foamed cell of the cured product indicates that the water absorption is not more than 10 % and the diameter of the closed-cell is not more than 500 µm.

### Example

The present invention is illustrated by the following Example.

### Example 1

Under the above-mentioned discharge and expansion procedure,
a one-pack type curing paste material having the below viscosity characteristics and 1 kg/cm² of low-pressure gas were mechanically dispersed to give an expandable material, and this material was discharged, expanded, and then cured to give a cured product of closed-cells wherein the water absorption is 2-3 % and diameter of the cell is 50-100 µm.

| apparent viscosity | | |
|---|---|---|
| one-pack type curing paste material* | (Pa s) | |
| | (0.43 sec⁻¹) | (783 sec⁻¹) |
| A. one-pack type thermoset-ting polyurethanes | 240 | 17.5 |
| A₁. one-pack type thermoset-ting polyurethanes | 6 | 2.8 |
| A₂. one-pack type thermoset-ting polyurethanes | 1000 | 120 |
| B. one-pack type moisture-curable polyurethanes | 2000 | 40 |
| C. one-pack type moisture-curable silicones | 300 | 60 |

| | | |
|---|---|---|
| *) A. PENGUIN FOAM PU-A, produced by SANSTER GIKEN KABUSHIKI KAISHA A₁. PENGUIN FOAM PU-A1, produced by SANSTER GIKEN KABUSHIKI KAISHA A₂. PENGUIN FOAM PU-A2, produced by SANSTER GIKEN KABUSHIKI KAISHA B. PENGUIN FOAM PU-B, produced by SANSTER GIKEN KABUSHIKI KAISHA C. PENGUIN FOAM SR-C, produced by SANSTER GIKEN KABUSHIKI KAISHA | | |

From the above result, it has been found that a foamed cured product with dense uniform closed-cells can be produced from one-pack type curing paste material having suitable viscosity characteristics, and the foamed cured product thus prepared can be applied to various fields of products requesting heat insulation, light-weighting, shock-absorbing, cushioning, sound deadening, vibration damping, impact-absorbing, protection, skin-decorating, waterstop and airtight; for example, constructing and building materials, packages, electric and electronic appliances, automobiles, household articles, sport articles and utensils.

Hence, the expandable materials of the present invention can be used, for example, as a sealant, an adhesive, a coating material, a gasket, a packing, a cushion, an insulator, a foamed molded material, etc.

## Claims

1. A method to produce a cured product by mechanically mixing and dispersing a paste material and a low-pressure gas, wherein the pressure is in the range of 0.1-5 kg/cm² to produce an expandable material, followed by discharging and expanding the expandable material, **characterised in that** a one-pack type curing paste material is used as the paste material, having viscosity characteristics in a zone defined by points A, B, C and D, said points A and B being at 5 and 3,000 Pa s of an apparent viscosity at 20°C and at a shear rate of 0.43 sec⁻¹, and said points C and D being at 2 and 200 Pa s of an apparent viscosity at 20°Cand at a shear rate of 783 sec⁻¹, respectively, and mechanically mixing and dispersing the one-pack type curing material and the low-pressure gas, followed by discharging and expanding the resulting expandable material.

2. The method according to claim 1,
wherein the method of mechanically mixing and dispersing a one-pack type curing paste material and a low-pressure, wherein the pressure is in the range of 0.1-5 kg/cm² gas to produce an expandable material comprises
supplying the low-pressure gas into a cylinder during and/or after a suction stroke of a piston pump which is reciprocated in the cylinder to carry out suction stroke and discharge stroke, then
supplying the one-pack type curing paste material into the cylinder with the low-pressure gas by batch
process,
carrying out the discharge stroke by using the piston pump after supplying the one-pack type curing paste material, and
discharging the low-pressure gas and the one-pack type curing paste material to a pipe in the discharge stroke.

3. The method according to claim 1 or 2, wherein the method of producing an expandable material and discharging and expanding the expandable material is carried out by using a mechanical foaming apparatus comprising,
a piston pump including a piston and a cylinder, in which the piston is adapted to reciprocally move within the cylinder to effect suction stroke and discharge stroke;
a gas supplying device for supplying a low-pressure gas, wherein the pressure is in the range of 0.1-5 kg/cm² into the cylinder under a predetermined pressure;
a paste material supplying device for supplying a one-pack type curing paste material into the cylinder with a low-pressure gas, wherein the pressure is in the range of 0.1-5 kg/cm² under a predetermined pressure;
a control device for effecting control to supply the low-pressure gas into the cylinder during and/or after the suction stroke of the piston pump, supply the one-pack type curing paste material into the cylinder, effect the discharge stroke of the piston pump after the supplying stroke of the one-pack type curing paste material, and discharge the low-pressure
gas and the one-pack type curing paste material into a pipe; and
a discharge device for discharging and expanding the expandable material into the pipe by connecting the pipe of the expandable material obtained from the control device.

4. The method according to one of claims 1 to 3,
wherein the expandable material is adapted for a sealant, an adhesive, a coating material , a gasket, a packing, a cushion, an insulator, and/or a foamed molded material.

## Patentansprüche

1. Verfahren zur Herstellung eines gehärteten Produktes durch mechanisches Mischen und Dispergieren eines Pastenmaterials und eines Niederdruckgases, wobei der Druck im Bereich von 0,1-5 kg/cm² ist, zur Herstellung eines expandierbaren Materials, gefolgt von Austragen und Expandieren des expandierbaren Materials, **dadurch gekennzeichnet, dass** ein Härter-Pastenmaterial vom Einkomponenten-Typus [one-pack type curing paste material] als Pastenmaterial verwendet wird, welches Viskositätscharakteristika in einer Zone aufweist, welche durch die Punkte A, B, C und D definiert ist, wobei die Punkte A und B bei 5 und 3.000 Pa s einer scheinbaren Viskosität bei 20°C und bei einer Schwergeschwindigkeit von 0,43 sec⁻¹ sind, beziehungsweise die Punkte C und D bei 2 und 200 Pa s einer scheinbaren Viskosität bei 20°C und bei einer Schwergeschwindigkeit von 783 sec⁻¹ sind, und mechanischem Mischen und Dispergieren des Härter-Pastenmaterial vom Einkomponenten-Typus und des Niederdruckgases, gefolgt von Austragen und Expandieren des resultierenden expandierbaren Materials.

2. Verfahren nach Anspruch 1, wobei das Verfahren des mechanischen Mischens und Dispergierens eines Härter-Pastenmaterials vom Einkomponenten-Typus und eines Niederdruckgases, bei welchem der Druck im Bereich von 0,1-5 kg/cm² Gas ist, zur Herstellung eines expandierbaren Materials,
das Zuführen des Niederdruckgases in einen Zylinder während und/oder nach einem Ansaughub einer Kolbenpumpe, welche im Zylinder zur Ausführung von Ansaugub und Austoßhub hin- und herbewegt wird, dann Zuführen des Härter-Pastenmaterials vom Einkomponenten-Typus in den Zylinder mit dem Niederdruckgas per Chargenverfahren,
Ausführen des Ausstoßhubes durch Verwendung der Kolbenpumpe nach Zufuhr des Härter-Pastenmaterials vom Einkomponenten-Typus, und
Austragen des Niederdruckgases und des Härter-Pastenmaterials vom Einkomponenten-Typus in ein Rohr im Ausstoßhub, umfasst.

3. Verfahren nach Anspruch 1 oder 2, wobei das Verfahren zur Herstellung eines expandierbaren Materials und Austragen und Expandieren des expandierbaren Materials unter Verwendung einer mechanischen Schäumvorrichtung durchgeführt wird, welche eine Kolbenpumpe, die einen Kolben und einen Zylinder beinhaltet, in welchem der Kolben so angepasst ist, dass er sich reziprok in dem Zylinder bewegt, um Ansaughub und Ausstoßhub zu erzeugen;
eine Gaszufuhreinrichtung für die Zufuhr eines Niederdruckgases, wobei der Druck im Bereich von 0,1-5 kg/cm² ist in den Zylinder unter einem vorbestimmten Druck;
Eine Zufuhreinrichtung für das Pastenmaterial für die Zufuhr eines Härter-Pastenmaterials vom Einkomponenten-Typus in den Zylinder mit einem Niederdruckgas, wobei der Druck im Bereich von 0,1-5 kg/cm² ist unter einem vorbestimmten Druck;
eine Kontrolleinrichtung zur Kontrolle der Zufuhr des Niederdruckgases in den Zylinder während und/oder nach dem Ansaughub der Kolbenpumpe, Zufuhr des Härter-Pastenmaterials vom Einkomponenten-Typus in den Zylinder, Herbeiführen des Ausstoßhubes der Kolbenpumpe nach dem Zufuhrhub des Härter-Pastenmaterials vom Einkomponenten-Typus, und Austragen des Niederdruckgases und des Härter-Pastenmaterials vom Einkomponenten-Typus in ein Rohr; und
eine Austragseinrichtung für Austrag und Expandierung des expandierbaren Materials in das Rohr durch Verbinden des Rohres des expandierbaren Materials, welches von der Kontrolleinrichtung erhalten wurde, umfasst.

4. Verfahren nach einem der Ansprüche 1 bis 3, wobei das expandierbare Material für eine Abdichtung, einen Klebstoff, ein Beschichtungsmaterial, eine Flachdichtung, eine Dichtung, ein Polster, einen Isolierstoff, und/oder ein formgeschäumtes Material angepasst ist.

## Revendications

1. Procédé de production d'un produit vulcanisé consistant à mélanger et disperser mécaniquement un matériau pâteux et un gaz basse pression, dans lequel la pression est dans la gamme allant de 0,1 à 5 kg/cm² pour produire un matériau expansible, puis à évacuer et dilater le matériau expansible, **caractérisé en ce qu'**un matériau pâteux pour vulcanisation de type monocomposant est utilisé comme matériau pâteux, ayant des caractéristiques de viscosité dans une zone définie par des points A, B, C et D, lesdits points A et B étant à 5 et 3 000 Pa·s d'une viscosité apparente à 20 °C et à un taux de cisaillement de 0,43 sec⁻¹, et lesdits points C et D étant à 2 et 200 Pa·s d'une viscosité apparente à 20 °C et à un taux de cisaillement de 783 sec⁻¹, respectivement, et à mélanger et disperser mécaniquement le matériau pour vulcanisation de type monocomposant et le gaz basse pression, puis à évacuer et dilater le matériau expansible obtenu.

2. Procédé selon la revendication 1, lequel procédé consistant à mélanger et disperser mécaniquement un matériau pâteux pour vulcanisation de type monocomposant et un gaz basse pression, dans lequel la pression est dans la gamme allant de 0,1 à 5 kg/cm², pour produire un matériau expansible, comprend :
la fourniture du gaz basse pression dans un cylindre pendant et/ou après une course d'aspiration d'une pompe à piston qui est animée d'un mouvement de va-et-vient dans le cylindre pour effectuer une course d'aspiration et une course de refoulement, puis la fourniture du matériau pâteux pour vulcanisation de type monocomposant dans le cylindre avec le gaz basse pression par un procédé discontinu,
l'exécution de la course de refoulement en utilisant la pompe à piston après avoir fourni le matériau pâteux pour vulcanisation de type monocomposant, et
l'évacuation du gaz basse pression et du matériau pâteux pour vulcanisation de type monocomposant dans un tuyau lors de la course de refoulement.

3. Procédé selon la revendication 1 ou 2, lequel procédé consistant à produire un matériau expansible et à évacuer et dilater le matériau expansible est effectué en utilisant un appareil de production mécanique de mousse comprenant :
une pompe à piston comprenant un piston et un cylindre, dans laquelle le piston est adapté pour effectuer un mouvement de va-et-vient dans le cylindre pour effectuer une course d'aspiration et une course de refoulement ;
un dispositif d'alimentation en gaz pour fournir un gaz basse pression, dans lequel la pression est dans la gamme de 0,1 à 5 kh/cm² dans le cylindre sous une pression prédéterminée ;
un dispositif de régulation pour effectuer la régulation pour envoyer le gaz basse pression dans le cylindre pendant et/ou après la course d'aspiration de la pompe à piston, envoyer le matériau pâteux pour vulcanisation de type monocomposant dans le cylindre,
effectuer la course de refoulement de la pompe à piston après la course d'alimentation du matériau pâteux pour vulcanisation de type monocomposant et évacuer le gaz basse pression et le matériau pâteux pour vulcanisation de type monocomposant dans un tuyau ; et
un dispositif d'évacuation pour évacuer et dilater le matériau expansible dans le tuyau en raccordant le tuyau du matériau expansible obtenu à partir du dispositif de régulation.

4. Procédé selon l'une des revendications 1 à 3, dans lequel le matériau expansible est adapté à un colmatant, un adhésif, un matériau de revêtement, un joint, une garniture d'étanchéité, un coussin, un isolant et/ou un plastique expansé moulé.
